# EUROPEAN PATENT APPLICATION

(11) **EP 1 263 220 A2**
(43) Date of publication of application: **04.12.2002**
(21) Application number: 02253250.1
(22) Date of filing: 09.05.2002
(51) Int. Cl.: H04N 5/445

(54) **Remote control apparatus**

(30) Priority: 31.05.2001 JP 2001164911
(71) Applicant: Pioneer Corporation, Meguro-ku, Tokyo (JP)
(72) Inventor: Okajima, Takahiro, c/o Pioneer Corporation, Tokorozawa-shi, Saitama (JP); Yasukura, Tsuneki, c/o Pioneer Corporation, Tokorozawa-shi, Saitama (JP); Ohkubo, Hirotoshi, c/o Pioneer Corporation, Tokorozawa-shi, Saitama (JP); Inoue, Hiroya, c/o Pioneer Corporation, Tokorozawa-shi, Saitama (JP); Hasegawa, Akihide, c/o Pioneer Corporation, Tokorozawa-shi, Saitama (JP); Azuma, Kenji, c/o Pioneer Corporation, Tokorozawa-shi, Saitama (JP)
(74) Representative: Haley, Stephen

(57) **Abstract**

A remote control apparatus is made up of a transceiver 1 for remotely controlling an electronic machine such as a television receiver 3 or a recorder 4 and a portable remote controller 2 for giving a remote control command to the transceiver 1. The transceiver 1 has section for extracting supplementary information of an electronic program guide, etc., from television broadcasts and the remote controller 2 has storage section for storing control information to remotely control electronic machines in such a manner that the control information can be updated and storage section for storing the supplementary information of an electronic program guide, etc., supplied from the transceiver 1 in such a manner that the supplementary information can be updated.

## Description

This invention relates to a remote control apparatus for the user to remotely control various electronic machines using supplementary information relevant to content supplied through broadcast media, communication media, etc., for example.

In recent years, digitalization of information has been going to move; for example, in the television broadcast field, a turning point has been reached in the transformation from analog television broadcasts to digital multichannel television broadcasts and an attempt has also been made to provide multimedia by intending a merger between broadcast media and communication media of the Internet, etc.

With development in such information digitalization, in the television broadcast field, an attempt is made to distribute not only distribution information (or content) in various categories such as news, music, movie, and drama programs from broadcast stations, but also supplementary information concerning content, thereby providing excellent convenience of the user, etc.

As the supplementary information, for example, an electronic program table or an electronic program guide (EPG) distributed in digital multichannel television broadcasts is known.

The electronic program guide information contains various items such as the titles, the broadcast schedule date and time and end date and time, the categories, and details for introducing the contents of broadcast programs. When a television receiver compliant with the digital multichannel television broadcast standard receives airwaves sent from a broadcast station, an electronic program guide having the various items mentioned above is video-displayed on the monitor screen for the user, etc.

Further, as the user, etc., specifies any of the various items video-displayed on the monitor screen with a remote controller for remote operation of the television receiver, he or she can easily display details of each broadcast program or preselect the program to view or record.

However, if the user, etc., wants to display an electronic program guide or preselect a program using the function developed based on the supplementary information distributed in the digital multichannel television broadcast mentioned above, the user, etc., purchases a television receiver and a recorder compliant with the digital multichannel television broadcast standard and can use the function developed based on the supplementary information only in the range of the specialized function for the nature of the television receiver and the specialized function for the nature of the recorder.

That is, if the user, etc., purchases a television receiver compliant with the digital multichannel television broadcast standard, he or she can use the function developed based on the supplementary information only in the range of the specialized function for the nature proper to the television receiver for receiving airwaves and displaying a picture on the monitor; if the user, etc., purchases a recorder compliant with the digital multichannel television broadcast standard, he or she can use the function developed based on the supplementary information only in the range of the specialized function for the nature proper to the recorder for receiving airwaves and recording a picture.

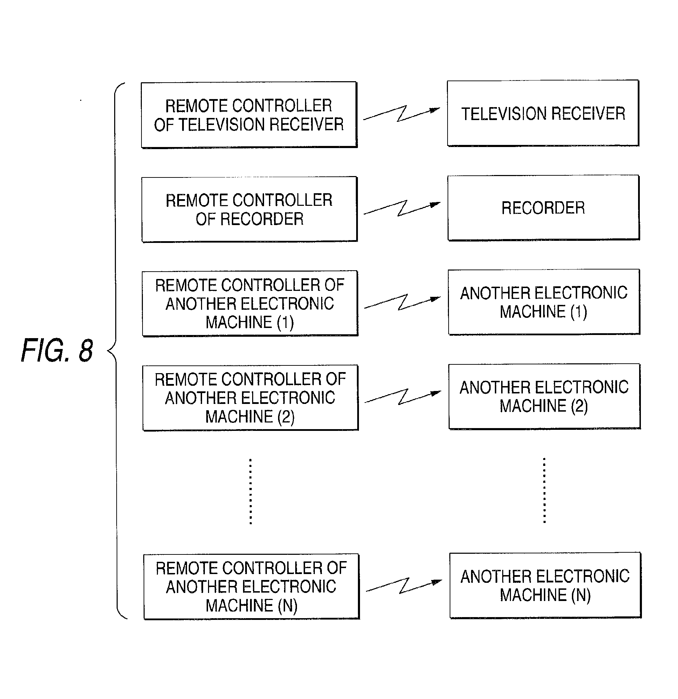

Thus, as shown schematically in FIG. 8, if the user, etc., wants to operate the television receiver based on the function using the supplementary information, the constraint that the user, etc., must operate the dedicated remote controller provided for the television receiver occurs and if the user, etc., wants to operate the recorder based on the function using the supplementary information, the constraint that the user, etc., must operate the dedicated remote controller provided for the recorder occurs. Therefore, the user, etc., is involved in the inconvenience of having to properly use the two different dedicated remote controllers.

Further, the electronic machine intended for providing various conveniences for the user, etc., using the electronic program guide information of the supplementary information is not limited to the television receiver or the recorder. Also in electronic machines other than the television receiver or the recorder, the user, etc., can use the function developed based on the supplementary information only in the range of the specialized function for the nature proper to each electronic machine and thus whenever an electronic machine is purchased, the number of the dedicated remote controllers is increased and the proper use of the different remote controllers becomes furthermore intricate; this is a problem.

Since the user, etc., must use the unique function developed for each electronic machine if he or she wants to use the developed function based on the electronic program guide information, the problem of having to purchase electronic machines and operate them with their respective dedicated remote controllers has been described. However, the supplementary information intended for improving the convenience of the user, etc., is not limited to the electronic program guide and if the user, etc., wants to use supplementary information other than the electronic program guide, a problem similar to that involved in the electronic program guide described above is involved.

Under such circumstances where various pieces of supplementary information are provided for improving the convenience of the user, etc., if the user, etc., must purchase electronic machines specialized as dedicated machines and operate them with their respective dedicated remote controllers, there is a problem of not meeting the demands for improving the convenience of the user, etc., or providing multimedia for the user to easily operate a plurality of purchased electronic machines in a unified manner.

It is therefore an object of the invention to provide a remote control apparatus using supplementary information relevant to content to remotely control an electronic machine, the remote control apparatus for providing the convenience of improving operability, etc., and being capable of dealing with multimedia.

To the end, according to the invention, there is prepared a remote control apparatus for remotely controlling at least one electronic machine for processing content, the remote control apparatus comprising control information storage section for previously storing control information to remotely control the at least one electronic machine, supplementary information storage section for storing supplementary information relevant to content, and control section, when a command to remotely control the at least one electronic machine is given, for remotely controlling the electronic machine specified in the command based on the control information in the control information storage section and the supplementary information in the supplementary information storage section.

According to the described remote control apparatus, the control information to remotely control the electronic machine to be controlled is previously stored in the control information storage section and further the supplementary information relevant to content is stored in the supplementary information storage section. When a command to remotely control the electronic machine is given, the control section remotely controls the electronic machine based on the control information in the control information storage section and the supplementary information in the supplementary information storage section. Thus, the remote control apparatus performs remote control of a wide range of electronic machines that can be controlled based on the control information stored in the control information storage section and the supplementary information in the supplementary information storage section rather than remote control of only a specific electronic machine based on the dedicated control information thereto.

In the described remote control apparatus, the supplementary information storage section stores information of an electronic program guide concerning broadcast programs distributed in television broadcasts as the supplementary information and wherein when a preselection command to start the at least one electronic machine is given based on the information of the electronic program guide, the control section remotely controls the electronic machine specified in the command based on the control information in the control information storage section and the information of the electronic program guide in the supplementary information storage section.

According to the described remote control apparatus, when a command to remotely control the electronic machine is given, the control section can remotely control the electronic machine specified in the command for program preselection, etc., based on the control information stored in the control information storage section and the information of the electronic program guide stored in the supplementary information storage section.

The described remote control apparatus further comprises display section for displaying the supplementary information stored in the supplementary information storage section and operation section for instructing the control section to remotely control the at least one electronic machine in accordance with the contents of the supplementary information displayed on the display section.

The described remote control apparatus enables the user, etc., to see the supplementary information displayed on the display section and enter any desired command through the operation section for remotely controlling the electronic machine.

In the described remote control apparatus, the control information storage section stores the control information in such a manner that the control information can be updated. The control section acquires the control information supplied by communication media or a storage medium and stores the control information in the control information storage section.

According to the described remote control apparatus, the control information storage section stores the control information in such a manner that the control information can be updated, and the control section acquires the control information supplied by communication media or a storage medium and stores the control information in the control information storage section in such a manner that the control information can be updated. Thus, if the user, etc., purchases a new electronic machine to be controlled, the current control information is updated to the control information corresponding to the electronic machine for performing proper remote control.

In the described remote control apparatus, the supplementary information storage section stores the supplementary information in such a manner that the supplementary information can be updated. The control section acquires the supplementary information supplied by at least one of broadcast, communication, and storage media and stores the supplementary information in the supplementary information storage section.

According to the described remote control apparatus, the supplementary information storage section stores the supplementary information in such a manner that the supplementary information can be updated, and the control section acquires the supplementary information supplied by at least one of broadcast, communication, and storage media and stores the supplementary information in such a manner that the supplementary information can be updated, whereby it is made possible for the user, etc., to remotely control the electronic machines to be controlled in various ways.
[FIG. 1]

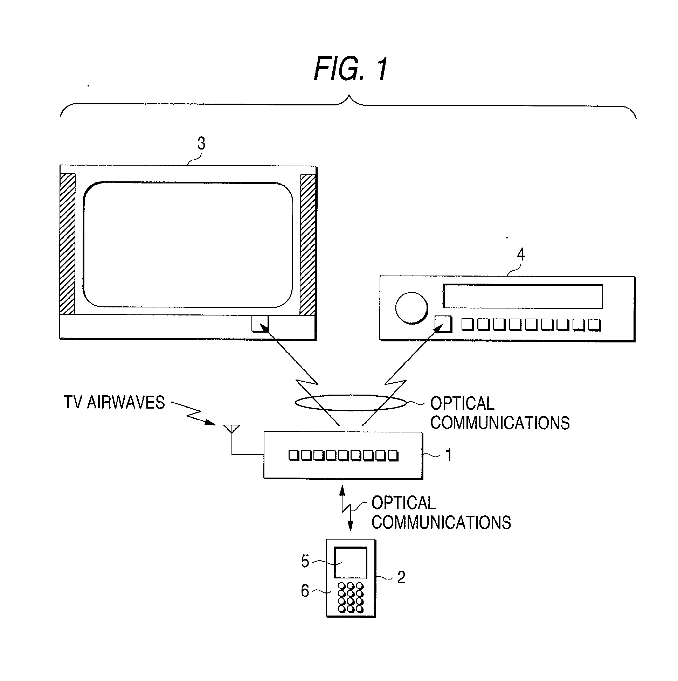

   FIG. 1 is a schematic representation to show the system configuration of a remote control apparatus of an embodiment of the invention;
[FIG. 2]

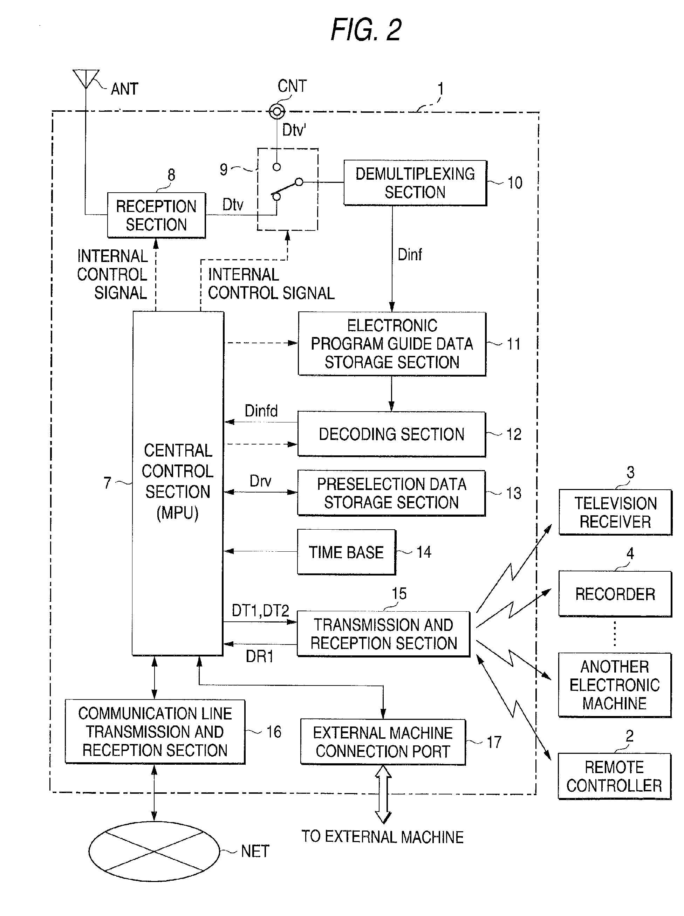

   FIG. 2 is a block diagram to show the configuration of a transceiver of the embodiment of the invention;
[FIG. 3]

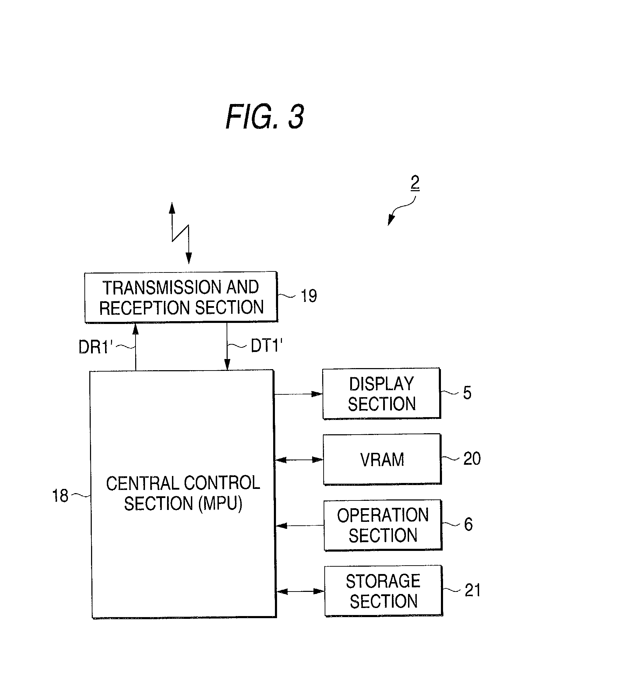

   FIG. 3 is a block diagram to show the configuration of a remote controller of the embodiment of the invention;
[FIG. 4]

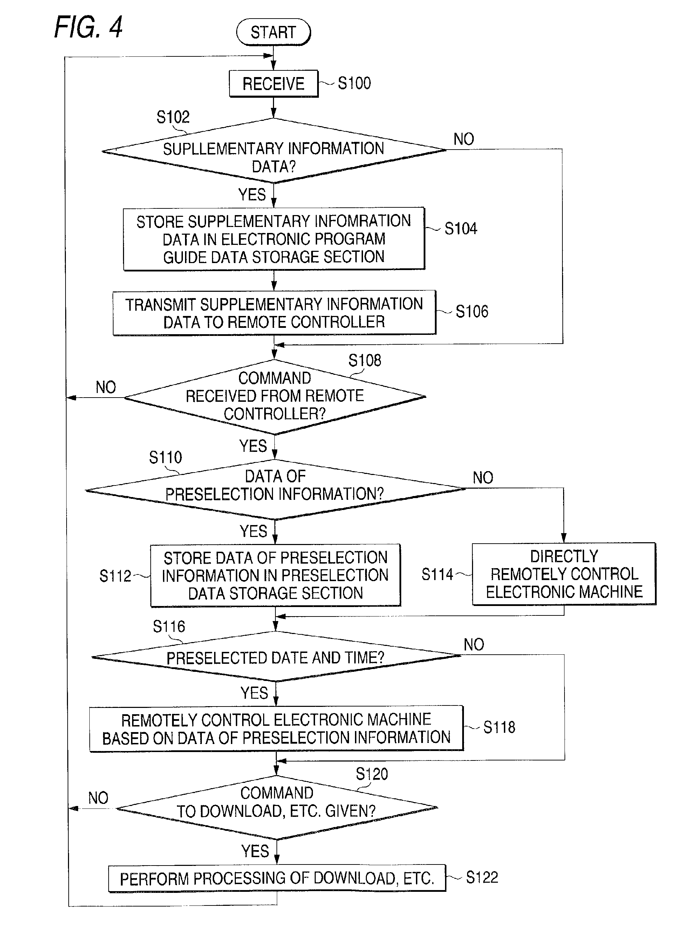

   FIG. 4 is a flowchart to describe the operation of the transceiver shown in FIG. 2;
[FIG. 5]

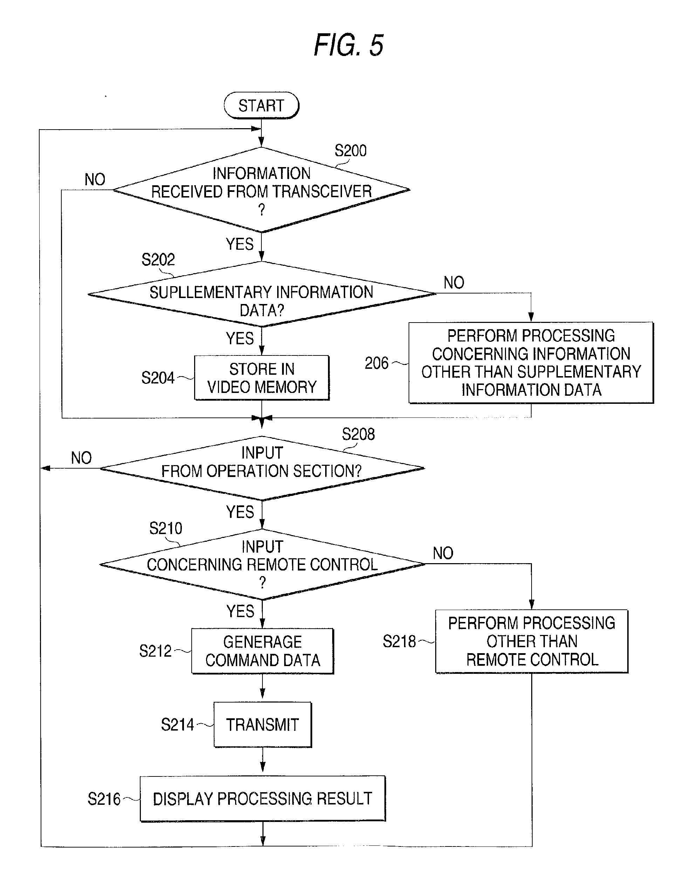

   FIG. 5 is a flowchart to describe the operation of the remote controller shown in FIG. 3;
[FIG. 6]

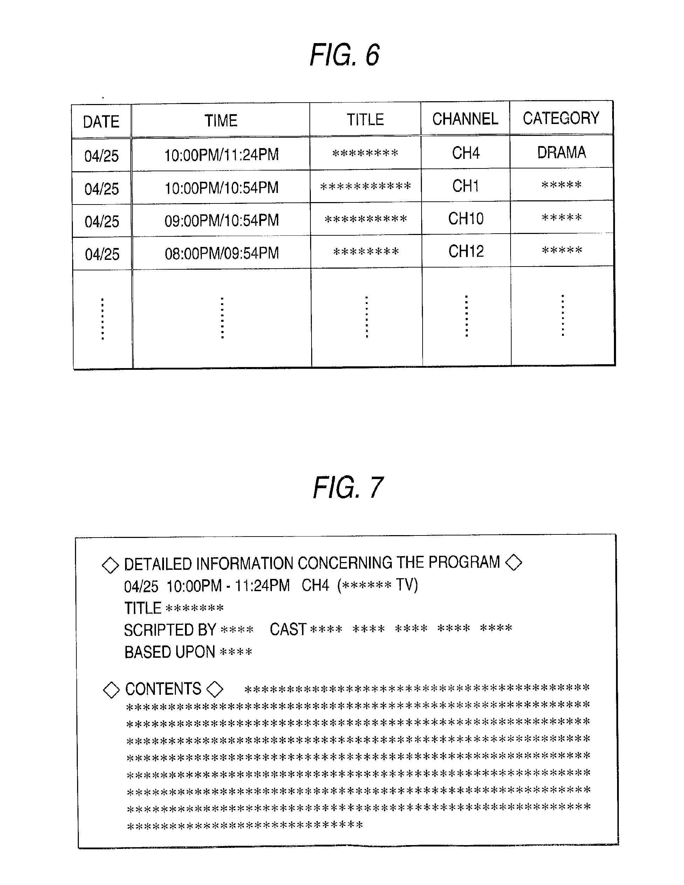

   FIG. 6 is a drawing to show a display example of an electronic program guide displayed on a display section of the remote controller;
[FIG. 7]
   FIG. 7 is a drawing to show a display example of details for introducing a program displayed on the display section of the remote controller; and
[FIG. 8]
   FIG. 8 is a drawing to describe problems of remote controllers in a related art.

Referring now to the accompanying drawings, there is shown a preferred embodiment of the invention. A remote control apparatus for the user to remotely control various electronic machines using supplementary information distributed together with content by a digital multichannel television broadcast will be discussed as an embodiment of the invention. Further, a remote control apparatus using at least electronic program guide information as supplementary information will be discussed.

FIG. 1 is a drawing to show the system configuration of the remote control apparatus and FIGS . 2 and 3 are block diagrams to show the detailed configuration of the remote control apparatus.

Referring to FIG. 1, the system configuration of the remote control apparatus will be generally discussed. The remote control apparatus is made up of a transceiver 1 and a portable remote controller 2.

The transceiver 1 comprises a reception function of receiving digital multichannel television broadcast airwaves (simply, TV airwaves) sent from a broadcast station and an extraction function of extracting data of supplementary information concerning broadcast program data (or content), which will be hereinafter referred to as supplementary information data, from digital multichannel television data provided by receiving TV airwaves.

The transceiver 1 further comprises a transmission and reception function of conducting bidirectional communications with the remote controller 2 and a transmission function of transmitting a remote control signal to an electronic machine of a television receiver 3, a recorder 4, etc., for controlling the operation thereof.

The mote controller 2 is made up of a display section 5 implemented as a liquid crystal display, etc., and an operation section 6 having a plurality of operation keys and comprises a transmission and reception function of conducting bidirectional communications with the transceiver 1.

The bidirectional communications are conducted between the transceiver 1 and the remote controller 2 by optical communications using infrared rays, etc., and the remote control signal is also transmitted from the transceiver 1 to the electronic machine of the television receiver 3, the recorder 4, etc., by optical communications using infrared rays, etc.

When the transceiver 1 extracts the supplementary information data, the supplementary information data is supplied to the remote controller 2 by optical communications and is displayed as an image on the display section 5 of the remote controller 2. For example, if the user, etc., operates a predetermined operation key of the operation section 6, the electronic program guide information contained in the supplementary information data is displayed on the display section 5.

If the user, etc., operates a predetermined operation key of the operation section 6 to remotely control any desired electronic machine of the television receiver 3, the recorder 4, etc., a command signal responsive to operating the operation key is transmitted from the remote controller 2 to the transceiver 1 by optical communications and further the transceiver 1 generates a remote control signal from the command signal and transmits the remote control signal to the electronic machine by optical communications for remotely controlling the electronic machine specified by the user, etc.

For example, if the user, etc., sees the electronic program guide displayed on the display section 5 and operates a predetermined operation key to preselect any desired program and electronic machine, a command signal having the preselection information is transmitted from the remote controller 2 to the transceiver 1 by optical communications. Further, when the preselected date and time come, the transmitter 1 generates a remote control signal indicating the preselection contents from the command signal and transmits the remote control signal to the electronic machine of the television receiver 3, the recorder 4, etc., by optical communications. Accordingly, the electronic machine indicated by the remote control signal, of the electronicmachine of the television receiver 3, the recorder 4, etc., accepts the program preselection from the user, etc. For example, if the television receiver 3 is preselected, the TV airwaves of the preselected program are received and video display is started; if the recorder 4 is preselected, the TV airwaves of the preselected program are received and video data recording is started.

Next, referring to FIGS. 2 and 3, the configuration of the remote control apparatus will be discussed in detail. FIG. 2 is a block diagram to show the configuration of the transceiver 1 and FIG. 3 is a block diagram to show the configuration of the remote controller 2.

In FIG. 2, the transceiver 1 comprises a central control section 7 having a microprocessor (MPU) for controlling the whole operation of the transceiver 1 by executing a preset predetermined system program.

Further, as components connected to the central control section 7, the transceiver 1 comprises a reception section 8, a switch section 9, a demultiplexing section 10, an electronic program guide data storage section 11, a decoding section 12, a preselection data storage section 13, a time base 14, a transmission and reception section 15, a communication line transmission and reception section 16, and an external machine connection port 17.

When TV airwaves of a digital multichannel television broadcast distributed from a broadcast station and coming from a ground station or a satellite are received at an antenna ANT, the reception section 8 converts a high-frequency reception signal output from the antenna ANT into digital multichannel television data Dtv that can undergo signal processing by RF demodulation and outputs the data Dtv.

The switch section 9 is connected to an output contact of the reception section 8, an external machine connection terminal CNT, and an input contact of the demultiplexing section 10 and allows either the digital multichannel television data Dtv output from the reception section 8 or digital multichannel television data Dtv' input from the outside through the external machine connection terminal CNT to be supplied to the demultiplexing section 10 as instructed by the central control section 7.

That is, if the electronic machine of the television receiver, etc., having an RF demodulation function similar to that of the reception section 8 is connected to the external machine connection terminal CNT, the central control section 7 detects the connection and switches the switch section 9 so as to connect the external machine connection terminal CNT and the input contact of the demultiplexing section 10 to supply the digital multichannel television data Dtv' to the demultiplexing section 10. If no electronic machine is connected to the external machine connection terminal CNT, the central control section 7 switches the switch section 9 to supply the digital multichannel television data Dtv output from the reception section 8 to the demultiplexing section 10.

As the switch section 9 and the external machine connection terminal CNT are thus provided, it is made possible to input not only the digital multichannel television data Dtv internally generated by the reception section 8, but also the digital multichannel television data Dtv' generated by external electronic machine.

The demultiplexing section 10 demultiplexes the digital multichannel television data Dtv (or Dtv') supplied through the switch section 9 into video data and sound data and supplementary information data and supplies the supplementary information data Dinf to the electronic program guide data storage section 11 for storage. That is, when the digital multichannel television data Dtv (or Dtv') having a data structure compliant with a predetermined standard is supplied to the demultiplexing section 10, the demultiplexing section 10 analyzes the data structure compliant with the predetermined standard, extracts the supplementary information data Dinf of the electronic program guide data, and stores the supplementary information data Dinf in the electronic program guide data storage section 11.

Further, whenever the supplementary information data Dinf of the most recent electronic program guide data is sent from a broadcast station, the electronic program guide data storage section 11 updates the already stored supplementary information data to the most recent supplementary information data Dinf.

When the supplementary information data Dinf stored in the electronic program guide data storage section 11 is read as instructed by the central control section 7, the decoding section 12 decodes the read supplementary information data Dinf into supplementary information data Dinfd and supplies the supplementary information data Dinfd to the central control section 7. That is, the supplementary information data Dinf is data subjected to data compression according to a predetermined technique and thus is decoded matching the data compression technique into the supplementary information data Dinfd that can undergo signal processing of video playback, etc., and the supplementary information data Dinfd is supplied to the central control section 7.

The preselection data storage section 13 stores data of preselection information specified by the user, etc., sent from the remote controller 2 as the user, etc., operates the remote controller 2.

The data stored in the preselection data storage section 13 will be discussed later in detail. A typical case is generally as follows: If the user, etc., operates the remote controller 2 to preselect any desired program to view, information concerning the preselected program is supplied to the central control section 7 through the transmission and reception section 15 (described later). The central control section 7 stores the information concerning the preselected program in the preselection data storage section 13 and further searches the electronic program guide data storage section 11 based on the information concerning the preselected program previously stored in the preselection data storage section 13, thereby acquiring the supplementary information data Dinfd read from the electronic program guide data storage section 11 and output through the decoding section 12. The central control section 7 checks the start schedule date and time, the end schedule date and time, etc., of the preselected program based on the contents of the supplementary information data Dinfd and when the start schedule date and time of the preselected program comes, the central control section 7 starts the electronic machine of the television receiver, etc., specified by the user, etc., for receiving the preselected program, playing back a picture, etc.

Thus, the preselection data storage section 13 is provided for storing the data of the preselection information specified by the user, etc., sent from the remote controller 2 and the central control section 7 performs control responsive to the data of the preselection information, whereby remote control responsive to the request of the user, etc., is provided.

The time base 14 accurately counts the current date and time and supplies the count data to the central control section 7 at all times. The central control section 7 compares the date and time preset by the data of the preselection information stored in the preselection data storage section 13 with the count data and when the preset date and time come, the central control section 7 starts to control the electronic machine in a manner as described above.

The transmission and reception section 15, which comprises an infrared detection element and an infrared light emission element, conducts bidirectional communications with the remote controller 2 by optical communications and transmits a remote control signal to the electronic machiine by optical communications.

That is, when the transmission and reception section 15 receives an optical signal emitted from the remote controller 2 at the infrared detection element, it converts the optical signal into reception data DR1 that can undergo signal processing, and supplies the reception data DR1 to the central control section 7. When transmission data DT1 to be transmitted to the remote controller 2 is supplied from the central control section 7, the transmission and reception section 15 modulates, etc., the transmission data DT1 and transmits to the remote controller 2 by emitting light from the infrared light emission element. Further, when remote control data DT2 to be transmitted to the electronic machine is supplied from the central control section 7, the transmission and reception section 15 modulates, etc., the remote control data DT2 and transmits to the electronic machine as a remote control signal by emitting light from the infrared light emission element.

The communication line transmission and reception section 16 is provided for connecting to the Internet NET, etc., via a commercial telephone line. Upon reception of data identical with or similar to the supplementary information data Dinf via a site established on the Internet NET, etc., as instructed by the central control section 7, the received data is stored in the electronic program guide data storage section 11. That is, the remote control apparatus can acquire not only the supplementary information data Dinf from TV airwaves, but also electronic program guide data similar to the supplementary information data Dinf using communication media.

The external machine connection port 17 is provided for connecting an information playback apparatus such as a CD player or a DVD player that can play back information recorded on a storage medium such as a CD (Compact Disc) or a DVD (Digital Versatile Disc). If the information played back from the storage medium is supplied through the external machine connection port 17 to the central control section 7 and is identical with or similar to the supplementary information data Dinf, the supplied data is stored in the electronic program guide data storage section 11. That is, the remote control apparatus can acquire not only the supplementary information data Dinf from TV airwaves or data similar to the supplementary information data Dinf using communication media, but also electronic program guide data recorded on and supplied from a storage medium such as a CD or a DVD.

If a download command is sent from the remote controller 2 to the transceiver 1, the central control section 7 instructs the communication line transmission and reception section 16 to access the site at a predetermined address connected to the Internet and receive distribution of electronic program guide data or preset code data described later. The electronic program guide data or preset code data described later can also be installed from the information playback apparatus connected to the external machine connection port 17.

Next, referring to FIG. 3, the configuration of the remote controller 2 will be discussed. The remote controller 2 comprises a central control section 18 having a microprocessor (MPU) for controlling the whole operation of the remote controller 2 by executing a predetermined system program.

Further, the above-described display section 5 and operation section 6 are connected to the central control section 18. In addition, connected to the central control section 18 are video memory 20 implemented as nonvolatile memory for storing data to produce video display on the display section 5, a storage section 21 implemented as nonvolatile memory for storing preset code data, and a transmission and reception section 19 for conducting bidirectional communications with the transmission and reception section 15 of the transceiver 1.

The transmission and reception section 19, which comprises an infrared detection element and an infrared light emission element, conducts bidirectional communications with the transmission and reception section 15 of the transceiver 1 by optical communications and transmits a remote control signal to the electronic machine by optical communications.

That is, when the transmission and reception section 19 receives an optical signal emitted from the transmission and reception section 15 of the transceiver 1 at the infrared detection element, it converts the optical signal into reception data DT1' that can undergo signal processing, and supplies the reception data DT1' to the central control section 18. When transmission data DR1' to be transmitted to the transmission and reception section 15 of the transceiver 1 is supplied from the central control section 18, the transmission and reception section 19 modulates, etc., the transmission data DR1' and transmits to the transmission and reception section 15 of the transceiver 1 by emitting light from the infrared light emission element.

Therefore, when the transmission and reception section 15 of the transceiver 1 shown in FIG. 2 transmits the transmission data DT1 to the remote controller 2 by optical communications, the transmission and reception section 19 of the remote controller 2 shown in FIG. 3 receives the transmission data DT1 and generates the reception data DT1' and supplies the data to the central control section 18. On the other hand, when the transmission and reception section 19 of the remote controller 2 shown in FIG. 3 transmits the transmission data DR1' to the transceiver 1 by optical communications, the transmission and reception section 15 of the transceiver 1 shown in FIG. 2 receives the transmission data DR1' and generates the reception data DR1 and supplies the data to the central control section 7.

The video memory 20 previously stores OSD data (on screen data) to display information on the operation method, etc., on the display section 5 and stores the supplementary information data Dinfd of electronic program guide data transmitted from the transceiver 1. When the user, etc., operates a predetermined operation key of the operation section 21, the central control section 18 reads out the supplementary information data Dinfd from the video memory 20 and supplies the supplementary information data Dinfd to the display section 5 for displaying the electronic program guide.

The storage section 21 previously stores preset code data. The preset code data is control data for remote control adopted in the electronic machine to be remotely controlled, such as the television receiver 3 and the recorder 4. That is, the storage section 21 stores the preset code data adopted for remotely controlling other electronic machines as well as the preset code data adopted for remotely controlling the television receiver 3 and the preset code data adopted for remotely controlling the recorder 4.

Thus, the unique preset code data adopted for each electronic machine to be remotely controlled is previously stored and when remote control described later is performed, the central control section 18 uses the preset code data corresponding to the specific electronic machine specified by the user, etc., to give a command of program preselection, etc., to the transceiver 1. Then, the transceiver 1 converts the command data into a remote control signal for remotely controlling the specific electronic machine specified by the user, etc.

The preset code data for remote control adopted in the electronic machines which are or will be commercially available is stored in the storage section 21 for shipping the remote control apparatus as a product. To remotely control new products of electronic machines developed and made commercially available after the remote control apparatus is shipped, the preset code data adopted in the new products of electronic machines can be later stored in the storage section 21.

That is, when the central control section 7 of the transceiver 1 downloads the preset code data adopted in the new product of electronic machine from the Internet NET, etc., through the communication line transmission and reception section 16, the downloaded preset code data is transmitted through the transmission and reception section 15 to the remote controller 2. When the transmission and reception section 19 of the remote controller 2 receives the transmitted preset code data, the central control section 18 stores the received preset code data in the storage section 21, whereby the new product of electronic machine can be remotely controlled.

If the user, etc., connects an information playback apparatus such as a CD player or a DVD player to the external machine connection port 17 of the transceiver 1 and uses the information playback apparatus to play back a storage medium such as a CD or a DVD recording the preset code data for remote control adopted in the new product of electronic machine, the central control section 7 installs the supplied preset code data and transmits the preset code data through the transmission and reception section 15 to the remote controller 2. When the transmission and reception section 19 of the remote controller 2 receives the preset code data, the central control section 18 stores the received preset code data in the storage section 21, whereby the new product of electronic machine can be remotely controlled.

Thus, as the preset code data is provided from the Internet NET or a storage medium, the preset code data corresponding to each new product of electronic machine is recorded in the storage section 21, whereby it is made possible to cover new products.

Next, the operation of the remote control apparatus made up of the transceiver 1 and the remote controller 2 will be discussed with reference to flowcharts of FIGS. 4 and 5. FIG. 4 is a flowchart to show the operation of the transceiver 1 and FIG. 5 is a flowchart to show the operation of the remote controller 2.

Since the remote control apparatus has remote control functions covering a broad spectrum, the case where the user, etc., purchases the television receiver 3 and the recorder 4 and remotely controls the electronic machine will be discussed as a typical operation example.

In FIG. 4, when the reception section 8 and the demultiplexing section 10 are connected by the switch section 9 shown in FIG. 2, the central control section 7 of the transceiver 1 always receives TV airwaves (step S100) and determines whether or not the supplementary information data Dinf is acquired (step S102).

If an electronic machine comprising a tuner capable of receiving television broadcasts is connected to the external machine connection terminal CNT, the central control section 7 receives the digital multichannel television data Dtv' supplied from the electronic machine at step S100 and further acquires the supplementary information data Dinf from the digital multichannel television data Dtv' at step S102.

If the supplementary information data Dinf of electronic program guide data is acquired by the demultiplexing section 10, the central control section 7 stores the supplementary information data Dinf in the electronic program guide data storage section 11 at step S104. If the most recent supplementary information data Dinf is acquired, the central control section 7 updates the current supplementary information data to the most recent supplementary information data Dinf for storage.

Further, the central control section 7 transmits the most recent supplementary information data Dinf through the transmission and reception section 15 to the remote controller 2 at step S106 and then goes to step S108. At step S106, the transmission and reception section 19 of the remote controller 2 receives the supplementary information data Dinf and further the central control section 18 stores the data Dinf in the video memory 20.

On the other hand, when the supplementary information data Dinf is not acquired, the central control section 7 skips steps S104 and S106 and goes to step S108.

At step S108, the central control section 7 checks whether or not reception data DR1 exists, and determines whether or not some command is received from the remote controller 2. If no command is received, the central control section 7 repeats the process starting at step S100.

If the central control section 7 determines that a command is received from the remote controller 2, it goes to step S110 and determines whether or not the reception data DR1 is data concerning program preselection (data of preselection information). That is, if the reception data DR1 contains information concerning preselection, such as a preselected program for the user, etc., to view with the television receiver 3 or a preselected program for the user, etc., to record with the recorder 4, the central control section 7 determines that data of preselection information is received. At step S112, the central control section 7 stores the data of preselection information in the preselection data storage section 13 and then goes to step S114. If the central control section 7 does not determine that data of preselection information is received, it skips step S112 and goes to step S114.

At step S114, the central control section 7 performs the operation specified by the reception data DR1. That is, if theuser, etc., gives any other command than program preselection, for example, gives a command to directly remotely control the television receiver 3 for switching the reception channel thereof or a command to directly remotely control the recorder 4 for causing the recorder 4 to start recording, the central control section 7 remotely controls the television receiver 3 or the recorder 4 in real time in accordance with the command.

Next, at step S116, the central control section 7 retrieves the data of preselection information already stored in the preselection data storage section 13, and determines whether or not the current date and time reach the preselected program date and time. If the central control section 7 does not find the data of preselection information corresponding to the preselected date and time, it goes to step S120; if the central control section 7 finds the data of preselection information corresponding to the preselected date and time, it goes to step S118 and remotely controls the corresponding electronic machine based on the found data of preselection information.

That is, if the found data of preselection information is data for starting the television receiver 3, the central control section 7 generates remote control data DT2 based on the data of preselection information and starts the television receiver 3, thereby enabling the user, etc., to view his or her preselected program. If the found data of preselection information is data for starting the recorder 4, the central control section 7 generates remote control data DT2 based on the data of preselection information and starts the recorder 4, thereby making it possible to record the program preselected by the user, etc.

Next, at step S120, the central control section 7 determines whether or not the user, etc., gives a command to download electronic program guide data, etc., from any desired site with communication media of the Internet, etc., connected to the communication line transmission and reception section 16 or gives a command to install electronic program guide data, etc., from an external machine such as a CD player connected to the external machine connection port 17. If no command is given, the central control section 7 repeats the process starting at step S100; if a command is given, the central control section 7 goes to step S122 and performs processing responsive to the command and then repeats the process starting at step S100.

That is, if the user, etc., gives a command to acquire the electronic program guide data through media other than television broadcasts, at step S122, the central control section 7 performs processing responsive to the command and downloads or installs the electronic program guide data into or in the electronic program guide data storage section 11.

Further, the downloaded or installed electronic program guide data is transmitted to the remote controller 2, whereby it is also made possible to download or install the electronic program guide data into or in the remote controller 2. If a command to download or install the preset code data for each electronic machine is given at step S120, the downloaded or installed preset code data is also transmitted to the storage section 21 of the remote controller 2 for storage at step S122.

Next, the operation of the remote controller 2 for the transceiver 1 will be discussed with reference to FIG. 5.

At step S200 in FIG. 5, whether or not some information is transmitted from the transceiver 1 is determined. The some information is the supplementary information data Dinfd transmitted by the transceiver 1, the supplementary information data Dinfd or the preset code data sent as downloaded or installed, or the like at step S106 or S122 in FIG. 4. Upon reception of the information, control goes to step S202.

At step S202, the central control section 18 determines whether or not the received data DT1 is the supplementary information data Dinfd.

If the data is the supplementary information data Dinfd, the central control section 18 stores the supplementary information data Dinfd in the video memory 20.

Accordingly, if the user, etc., operates a predetermined operation key of the operation section 21, an electronic program guide can be displayed on the display section 5, as illustrated in FIG. 6. The user, etc., appropriately selects a display item out of the displayed electronic program guide, whereby it is made possible to display details, etc., to introduce the contents of the program, as illustrated in FIG. 7.

The display example in FIG. 7 shows the case where the user, etc., specifies the program entered in the first row in FIG. 6 by operating the operation section 6. Further, if the user etc., specifies a display item in the electronic program guide illustrated in FIG. 6 by operating the operation section 6, it is made possible to preselect any desired program.

On the other hand, if information other than the supplementary information data Dinfd is sent from the transceiver 1, the central control section 18 performs processing concerning the information other than the supplementary information data at step S206. For example, if preset code data is sent, the central control section 18 stores the preset code data in the storage section 21.

Next, at step S208, the central control section 18 determines whether or not the user, etc., operates the operation section 6. If the operation section 6 is not operated, the central control section 18 repeats the process starting at step S200.

If the operation section 6 is operated, the central control section 18 goes to step S210 and determines whether or not the contents specified by the user, etc., operating the operation section 6 is input for performing remote control.

If any command other than remote control is given, the central control section 18 performs processing only in the remote controller 2 at step S218. That is, the central control section 18 performs processing not directly relevant to remote control, such as displaying the electronic program guide data already stored in the video memory 20 on the display section 5 or displaying details, etc., to introduce the contents of the program.

On the other hand, if a command relevant to remote control is given, the central control section 18 goes to step S212 from step S210. For example, if the user, etc., gives a command executed through the transceiver 1, such as program preselection or switching the reception channel of the television receiver 3, the central control section 18 goes to step S212.

At step S212, the central control section 18 performs processing to generate command data specified by the user, etc.

For example, if the user, etc., selects any desired program out of the display items of the electronic program guide displayed on the display section 5 and further selects the television receiver 3 or the recorder 4, the central control section 18 acquires the preset code data of the electronic machine already stored in the storage section 21 and generates data of preselection information containing information concerning the preselected program and the preset code data corresponding to the control contents specified by the user, etc., as command data. For the user, etc., to directly remotely control the television receiver 3 or the recorder 4, the central control section 18 also generates command data based on the preset code data of the television receiver 3 or the recorder 4 specified.

Since the preset code data is thus already stored in the storage section 21, the user, etc., can select any desired electronic machine to remotely control from among a wide range of electronic machines.

To download the preset code data or electronic program guide data from the Internet, etc., or install the preset code data or electronic program guide data from a CD player, etc., the central control section 18 also generates command data to control the transceiver 1 in accordance with the command of the user, etc., at step S212.

Next, at step S214, the central control section 18 supplies the generated command data to the transmission and reception section 19 as transmission data DR1' for transmitting the data to the transceiver 1. At step S216, the central control section 18 displays the processing result indicating the transmission processing contents on the display section 5 and then repeats the process starting at step S200.

Thus, when step S214 is performed, the process at step S110, S112, S114, S122, etc., shown in FIG. 4 is executed in the transceiver 1.

As described above, the remote control apparatus of the embodiment enables the user, etc., to remotely control various types of electronic machines with one remote controller 2, so that it can be provided as an extremely convenient remote control apparatus.

Particularly, the preset code data of the electronic machine to be remotely controlled is stored in the storage section 21 of the remote controller 2, so that the remote control apparatus provides the excellent advantage that various types of electronic machines can be remotely controlled. Further, the preset code data stored in the storage section 21 can be updated, so that the remote control apparatus provides the excellent advantage that to remotely control a new product of electronic machine, the remote control apparatus can also cover it.

Further, the preset code data can be acquired (installed) from a storage medium such as a CD or a DVD or can be acquired (downloaded) from communication media of the Internet, etc., so that the remote control apparatus provides an excellent function dealing with multimedia.

Since an electronic program guide can be displayed on the display section 5 of the remote controller 2 for the user, etc., to preselect a program, etc., excellent convenience can be provided for the user, etc. Further, the electronic program guide data can be acquired from media other than television broadcasts, namely, canbe acquired (installed) from a storage medium such as a CD or a DVD or can be acquired (downloaded) from communication media of the Internet, etc., so that the remote control apparatus provides an excellent function dealing with multimedia.

In the description of the embodiment, the remote control apparatus made up of the transceiver 1 and the remote controller 2 has been described, but the transceiver 1 may be previously built in an electronic machine such as the television receiver 3 or the recorder 4 and the remote controller 2 may be a portable remote controller attached to the electronic machine. In this configuration, the remote controller 2 can be used not only for operating the electronic machines such as the television receiver 3 and the recorder 4, but also for remotely controlling other electronic machines; excellent convenience can be provided for the user, etc.

The remote controller 2 can be provided with the function of the transceiver 1. Particularly, the remote controller 2 may be provided with a function similar to that of the transmission and reception section 15 for transmitting remote control signals to remotely control the electronic machines such as the television receiver 3 and the recorder 4. This configuration makes it possible to directly remotely control the electronic machines such as the television receiver 3 and the recorder 4 from the remote controller 2 not via the transceiver 1.

In the embodiment, communications between the transceiver 1 and the remote controller 2 are conducted by optical communications, but radio waves may be used to conduct communications.

In the embodiment, the case where the electronic program guide data is used as the supplementary information data to remotely control the television receiver and the recorder has been described. However, the remote control apparatus of the invention can use not only the electronic program guide data, but also the supplementary information data relevant to various types of content like the electronic program guide data to remotely control the television receiver, the recorder, and any other electronic machine.

As described above, according to the remote control apparatus of the invention, the control information to remotely control the electronic machine to be controlled is previously stored in the control information storage section, and the control section remotely controls the specified electronic machine based on the control information stored in the control information storage section, so that it is made possible to perform remote control of a wide range of electronic machines that can be controlled based on the control information stored in the control information storage section rather than remote control of only a specific electronic machine, and the convenience of the user, etc., can be improved.

Since the specified electronic machine is remotely controlled based on the control information stored in the control information storage section and the contents of the supplementary information stored in the supplementary information storage section, so that the electronic machine can be remotely controlled for program preselection, etc., based on the supplementary information of the electronic program guide, etc., and the convenience of the user, etc., can be improved.

The control information in the control information storage section can be updated and the control information supplied by communication media or a storage medium is stored in the control information storage section in such a manner that the control information can be updated. Thus, if the user, etc., purchases a new electronic machine to be controlled, the current control information can be updated to the control information corresponding to the electronic machine for performing proper remote control, and the convenience of the user, etc., can be improved. Particularly, it is made possible to acquire the control information by means of communication media or a storage medium, so that the remote control apparatus for dealing with multimedia can be provided and the convenience of the user, etc., can be improved.

The supplementary information in the supplementary information storage section can be updated and the supplementary information supplied by at least one of broadcast, communication, and storage media is stored in such a manner that it can be updated. Thus, it is made possible for the user, etc., to remotely control the electronic machines to be controlled in various ways. Particularly, it is made possible to acquire the supplementary information by means of communication media or a storage medium, so that the remote control apparatus for dealing with multimedia can be provided and the convenience of the user, etc., can be improved.

## Claims

1. A remote control apparatus for remotely controlling at least one electronic machine for processing contents,
said remote control apparatus comprising:
control information storage section for previously storing control information to remotely control said at least one electronic machine;
supplementary information storage section for storing supplementary information relevant to the contents; and
control section, when a command to remotely control said at least one electronic machine is given, for remotely controlling said electronic machine specified in the command based on the control information in said control information storage section and the supplementary information in said supplementary information storage section.

2. The remote control apparatus as claimed in claim 1, wherein
said supplementary information storage section stores information of an electronic program guide concerning broadcast programs distributed in television broadcasts as the supplementary information, and
when a preselection command to start said at least one electronic machine is given based on the information of the electronic program guide, said control section remotely controls said electronic machine specified in the command based on the control information in said control information storage section and the information of the electronic program guide in said supplementary information storage section.

3. The remote control apparatus as claimed in claim 1, further comprising:
display section for displaying the supplementary information stored in said supplementary information storage section, and
operation section for instructing said control section to remotely control said at least one electronic machine in accordance with the contents of the supplementary information displayed on said display section.

4. The remote control apparatus as claimed in claim 1, wherein
said control information storage section stores the control information so as to update the control information.

5. The remote control apparatus as claimed in claim 4, wherein
said control section acquires the control information supplied by communication media or a storage medium, and stores the control information in said control information storage section.

6. The remote control apparatus as claimed in claim 1, wherein
said supplementary information storage section stores the supplementary information so as to update the supplementary information.

7. The remote control apparatus as claimed in claim 6, wherein
said control section acquires the supplementary information supplied by at least one of broadcast, communication, and storage media, and stores the supplementary information in said supplementary information storage section.

8. The remote control apparatus as claimed in claim 1, wherein communications are conducted by optical communications.

9. The remote control apparatus as claimed in claim 1, wherein communications are conducted by radio waves.
